Europäisches Patentamt

European Patent Office

Office européen des brevets

(19)

(11) **EP 0 730 353 A1**

(12) **EUROPÄISCHE PATENTANMELDUNG**

(43) Veröffentlichungstag:
04.09.1996 Patentblatt 1996/36

(51) Int. Cl.[6]: **H04B 1/40**, H04B 1/38

(21) Anmeldenummer: **95102827.3**

(22) Anmeldetag: **28.02.1995**

(84) Benannte Vertragsstaaten:
**AT BE CH DE DK ES FR GB GR IE IT LI LU MC NL
PT SE**

(71) Anmelder: **SMD FUNK AG
CH-6003 Luzern (CH)**

(72) Erfinder: **Nordlander, Ulf
CH-63110 Rodgau (CH)**

(74) Vertreter: **Schmid, Rudolf, Dipl.-Ing.
Patentanwalt
Seckenheimer Strasse 36a
68165 Mannheim (DE)**

Bemerkungen:
Ein Antrag gemäss Regel 88 EPÜ auf Berichtigung
der Beschreibung liegt vor. Über diesen Antrag wird
im Laufe des Verfahrens vor der Prüfungsabteilung
eine Entscheidung getroffen werden (Richtlinien für
die Prüfung im EPA, A-V, 3.).

(54) **Funkübertragungssystem für frequenz- oder amplitudenmodulierte Datenübertragung**

(57) Die Erfindung betrifft Funkübertragungssysteme für frequenz- oder amplitudenmodulierte Datenübertragung mit einer Einrichtung (2, 27) zur Bereitstellung einer Gleichspannung, einem Mikroprozessor (6, 75, 81), einem EEPROM (20), in dem Daten zur Steuerung der Datenübertragung gespeichert sind, Datenaustauscheinrichtungen (21, 22) zwischen dem Mikroprozessor (6, 75, 81) und dem EEPROM (20), und einer ersten Antenne (9, 12) für die Datenübertragung. Der Mikroprozessor (6, 75, 81) enthält Bauelemente ((40, 41) der Hochfrequenztechnik zur Modulation von Codes. Ein Frequenzgeber (32) ist vorgesehen, der an die Bauelemente (40, 41) der Hochfrequenztechnik angeschlossen ist. Vom EEPROM (20) werden an die Bauelemente (40, 41) der Hochfrequenztechnik Codes und Modulationsparameter ausgegeben, und ein Anschluß D0 ist zur Übertragung eines digitalen Signals an dem Mikroprozessor (6, 75, 81) vorgesehen.

Fig. 1

**Beschreibung**

Die Erfindung betrifft ein Funkübertragungssystem für frequenz- oder amplitudenmodulierte Datenübertragung mit den Merkmalen des Oberbegriffs des Anspruchs 1.

ASICs (Application Specific Integrated Circuits) bieten kompakte Lösungen für spezifische Anwenderprobleme, wo Standardkomponenten in integrierten Schaltkreisen zu hohen Kosten führen. ASICs haben mechanische und elektrische Vorteile, brauchen wenig Leistung, haben geringe Verluste, sind unempfindlich gegen Rauschen und verbessern den elektrostatischen Schutz.

Aus "Elektronikpraxis Nr. 9, September 1988, S. 48, -Geheimnisträger-" ist es bekannt, ein ASIC, das neben analogen und digitalen Schaltungen auch einen elektrisch löschbaren EEPROM-Speicher besonders niedriger Leistungsaufnahme enthält, mit einigen diskreten Bauelementen zu einem drahtlosen Sender/Empfänger aufzubauen. Auf einer kleinen Platine sind neben einem IC die diskreten Hochfrequenzkomponenten und zwei Antennen für Senden und Empfangen angeordnet. Das ASIC basiert auf CMOS-Technologie mit zwei Poly- und einer Metallisierungsschicht. Ein Oszillator ist in den ASIC integriert, dessen Frequenz sich mit einem im EEPROM abgespeicherten Korrekturwert variieren läßt. Nachteilig bei diesem Sender/Empfänger ist dessen Abhängigkeit von einem externen Mikrowellenfeld, aus dem gemäß diesem Stand der Technik der Sender/Empfänger seine Energie gewinnt.

Bekannt ist aus einer Veröffentlichung EP 0 358 478 auch ein Fernbedienungssystem zur Betätigung von Garagentoren. Ein Sender ist mit einer Batterie zur Bereitstellung einer Versorgungsspannung, zwei Schaltern und einer Anzeige ausgestattet. Im Sender ist ein EEPROM mit einem gespeicherten M-Bit-Basiscode, ein Mikroprozessor und Datenaustauscheinrichtungen zwischen Mikroprozessor und EEPROM enthalten. Der Mikroprozessor liest den Basiscode aus dem EEPROM und bestimmt einen Sendekanal und einen Code aus dem Basiscode und zwei Zählern, wobei die Zähler jeweils die Anzahl der Betätigungen eines der zwei Schalter wiedergeben. Nachteilig bei diesem Fernbedienungssystem ist, daß der Sender zusätzlich zum Mikroprozessor mit einem Zwischenspeicher, einem Verstärker, Kapazitäten, Widerständen, und Transistoren zur Modulation der Sendefrequenz ausgestattet ist, da diese Elemente die Kosten des Fernbedienungssystems erhöhen, störanfällig sind und neben dem Mikroprozessor Platz beanspruchen. Der Sender gemäß dem genannten Stand der Technik ist nicht geeignet, eine Rückmeldung zu empfangen und wiederzugeben, die den Empfang des ausgegebenen Signals bestätigt. Der Inhalt dem EEPROM ist beschränkt auf die Ausgabe einer Trägerfrequenz in einem störanfälligen Frequenzbereich von ca. 300 MHz. Die Sendeleistung ist nicht steuerbar.

Aufgabe der Erfindung ist es, ein kompaktes, kostengünstiges und betriebssicheres Funkübertragungssystem für frequenz- oder amplitudenmodulierte Datenübertragung zu schaffen, das die Nachteile des genannten Stands der Technik überwindet.

Die Lösung erfolgt mit einem Funkübertragungssystem für frequenz- oder amplitudenmodulierte Datenübertragung mit den Merkmalen des Anspruchs 1. Vorteilhafte Ausgestaltungen der Erfindung sind in den Unteransprüchen dargestellt.

Gemäß der Erfindung ist ein Funkübertragungssystem für frequenz- oder amplitudenmodulierte Datenübertragung mit einer Einrichtung zur Bereitstellung einer Versorgungsspannung, einem Mikroprozessor, einem EEPROM, Datenaustauscheinrichtungen zwischen Mikroprozessor und EEPROM, und einer ersten Antenne für die Datenübertragung ausgestattet. Der Mikroprozessor enthält neben Standardkomponenten Bauelemente der Hochfrequenztechnik zur Modulation von Codes. Ein Frequenzgeber ist vorgesehen, der an die Bauelemente der Hochfrequenztechnik angeschlossen ist. Der Mikroprozessor des erfindungsgemäßen Funkübertragungssystems ist mit den Bauelementen der Hochfrequenztechnik wie ein ASIC an die Funktion des Senden/Empfangen angepaßt, so daß die den ASICs spezifischen Vorteile, wie kompakte Bauweise, geringe Kosten, hohe Störsicherheit, guter elektrostatischer Schutz,... etc., für die Funkübertragung genutzt werden. Außer Antenne und beispielsweise einem Quarz als Frequenzgeber sind außerhalb des Mikroprozessors keine Bauelemente der Hochfrequenztechnik vorgesehen. Die kompakte Bauweise kommt insbesondere handbetriebenen Sendern zugute, die z.B. am Schlüsselbund befestigt werden. Die in den Mikroprozessor integrierten Bauelemente sind sowohl für den Empfangswie den Sendebetrieb geeignet, so daß der erfindungsgemäße Mikroprozessor sowohl für Sender oder auch Empfänger verwandt werden kann. Sind Sender und Empfänger in einem Gerät vereinigt, genügt ein erfindungsgemäßer Mikroprozessor für den Sende- als auch den Empfangsbetrieb. Vom EEPROM werden an die Bauelemente der Hochfrequenztechnik Modulationsparameter ausgegeben, so daß die Übertragungsfrequenzen flexibel moduliert und damit z. B. die Übertragungsgeschwindigkeiten des Senders/Empfängers variiert werden können. Ein Anschluß D0 am Mikroprozessor überträgt ein digitales Signal. Das erfindungsgemäße Funkübertragungssystem arbeitet vorzugsweise in einem Frequenzbereich von ca. 430 MHz, dessen Störanfälligkeit sehr gering ist.

Gemäß einer vorteilhaften Ausgestaltung der Erfindung ist ein Eingang R/T für ein digitales Signal am Mikroprozessor vorgesehen, wobei die Funktion des Mikroprozessors als Sender oder Empfänger am Eingang R/T gesteuert wird. Mit diesem Mikroprozessor, der Senden und Empfangen in einem Gerät ermöglicht, kann der Anwender, eine Bestätigung für einen ausgesandten Befehl erhalten, z. B. wenn der Sender einen Alarm an eine nahegelegene Polizeistation absendet, und der Anwender eine Bestätigung, ob sein Alarm tatsächlich angekommen ist, dringend erwartet. Die integrierte Bauweise gemäß der Erfindung ergibt eine besonders kostengünstige, betriebssichere, kompakte Bauweise.

Eine weitere Ausgestaltung des Funkübertragungssystems für frequenz- oder amplitudenmodulierte Datenübertragung gemäß der Erfindung sieht eine Mehrfachverwendung des Anschlusses D0 vor, der z. B. eine Leuchtanzeige oder ein Relais steuert. Bei Verwendung in einem Empfänger gibt der Anschluß D0 des Mikroprozessors eine Empfangsbestätigung für einen übertragenen Befehl oder den Befehl selbst aus.

Das erfindungsgemäße Funkübertragungssystem für frequenz- oder amplitudenmodulierte Datenübertragung sieht im Fall eines Empfängers mit Rückmeldung vor, daß Anschluß D0 den Eingang R/T des Mikroprozessors eines Empfängers steuert. Hat ein Empfänger mit dem erfindungsgemäßen Mikroprozessor ein Signal mit einem akzeptierten Code für einen Befehl empfangen, und ist der Befehl am Ausgang D0 mittels eines Steuerbits ausgegeben worden, stellt das Steuerbit von D0 automatisch den Empfänger auf Sendebetrieb um, so daß dem zugehörigen Sender eine Bestätigung für den Empfang des Befehls am Empfänger zugeht. Vorzugsweise wiederholt der Empfänger mit Rückmeldung die Bestätigung automatisch mehrfach, wobei die Anzahl der Wiederholungen dem Mikoprozessor von den im EEPROM abgespeicherten Codes vorgegeben ist.

Eine Ausgestaltung des Funkübertragungssystem für frequenz- oder amplitudenmodulierte Datenübertragung gemäß der Erfindung sieht vor, daß am Mikroprozessor ein Eingang LRN vorgesehen ist, der über einen Schalter gesteuert wird. Der Zustand am Eingang LRN steuert den Austausch von Codes zwischen Mikroprozessor und EEPROM, so daß ein ursprünglich vom Hersteller dem EEPROM eingegebener Code überschrieben werden kann. Vorzugsweise ist der über einen Schalter gesteuerte Eingang LRN an einem Mikroprozessor eines z. B. an einer Garagentür fest installierten Empfängers vorgesehen, der beispielsweise bei Änderung des Verfügungsberechtigten oder bei Verlust eines zugehörigen Senders vom Anwender mit einem neuen Sender neue Codes in seinen EEPROM geladen bekommt, wenn der am Empfänger vorgesehene, selbstverständlich nicht jedermann frei zugängliche Schalter betätigt wird, so daß der neue Sender mit dem Empfänger wieder kompatibel ist.

Für anspruchsvollere Anwendungen als beispielsweise Öffnen einer Tür kann das Funkübertragungssystem für frequenz- oder amplitudenmodulierte Datenübertragung in einer Ausgestaltung als Sender mit Schaltern den Anschluß D0 und Anschlinsse D1 und D2 am Mikroprozessor steuern. Bei drei binären Anschlüssen D0, D1 und D2 am Mikroprozessor sind mit Schaltern bis zu 8 verschiedene Befehle darstellbar, die vom Mikroprozessor ausgegeben werden können.

Gemäß einer Ausgestaltung des Funkübertragungssystems für frequenz- oder amplitudenmodulierte Datenübertragung sind die Anschlüsse D0, D1 und D2 des Mikroprozessors eines Empfängers mit einem Decoder mit 8 Ausgängen verbunden. Bis zu 8 verschiedene Codes für Befehle können vom Mikroprozessor über die Anschlüsse D0, D1 und D2 ausgegeben und im Decoder an die entsprechenden Ausgänge gegeben werden.

Für die Integration in einen Mikroprozessor weist das Funkübertragungssystem für frequenz- oder amplitudenmodulierte Datenübertragung gemäß der Erfindung einen bipolaren Hochfrequenzteil und einen Logikteil in CMOS-Struktur auf.

Gemäß der Erfindung wird eine Phasenregelschleife, - im folgenden PLL genannt -, mit spannungsgesteuertem Oszillator eines Senders auch für Empfänger verwendet, so daß sich eine besonders kompakte und kostengünstige Bauweise für Sender mit Empfangsbestätigung und Empfänger mit Rückmeldung ergibt.

Gemäß einer Ausgestaltung des Funkübertragungssystems für frequenz- oder amplitudenmodulierte Datenübertragung gemäß der Erfindung ist der PLL zur Steuerung der Übertragungsgeschwindigkeit des Mikroprozessors digital steuerbar.

Gemäß einer weiteren Ausgestaltung des Funkübertragungssystems für frequenz- oder amplitudenmodulierte Datenübertragung gemäß der Erfindung sind Kondensatoren in einer Einrichtung zur Bereitstellung einer Versorgungsspannung oder dem Anschluß R/T des Mikropozessors vorgeschaltet vorgesehen, die das Umschalten von Senden auf Empfang verzögern. Durch diese zeitliche Verzögerung beim Umschalten wird erreicht, daß ein unbefugter Inhaber eines Senders nicht innerhalb einer überschaubaren Zeitspanne durch systematisches Probieren einen Code des Empfängers findet und z. B. unbefugt das vom Empfänger gesicherte Garagentor öffnet.

Die Erfindung wird im folgenden anhand von Ausführungsbeispielen erläutert. Es zeigen:

Fig. 1    einen Schaltplan eines Senders mit Rückmeldung,

Fig. 2    einen Schaltplan eines Empfängers mit Rückmeldung,

Fig. 3    einen Schaltplan eines Handsenders mit 8 Befehlen,

Fig. 4    einen Schaltplan eines Empfänger mit 8 Befehlen und Relaisausgang und

Fig. 5    einen Schaltplan eines Phasenregelkreis PLL für Sender und Empfänger.

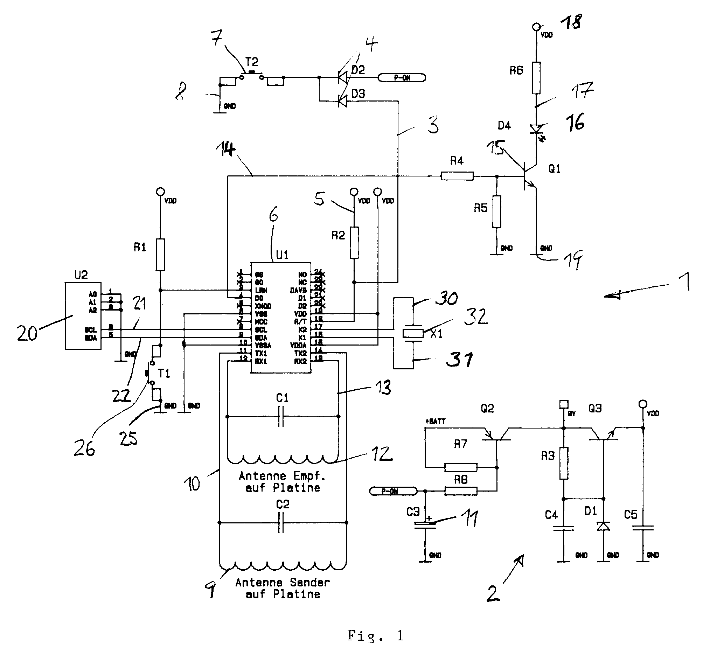

Fig. 1: Ein Sender 1 mit Rückmeldung weist eine Einrichtung 2 zur Bereitstellung einer Versorgungsgleichspannung von 5 V aus 9 V Batterien auf. Die Versorgungsspannung 5 V liegt an allen Anschlüssen VDD des Senders 1 mit Rückmeldung an. Die Masseanschlüsse sind mit GND gekennzeichnet.

Sender 1 mit Rückmeldung enthält wie folgt beschriebene digitale Schaltungen, die Binärzeichen 0 und 1 verarbeiten. Die Binärzeichen lassen sich durch einen hohen und einen niedrigen Spannungswert darstellen. Der hohe Spannungswert (High) wird im folgenden mit 1 und der niedrige Spannungswert mit 0 bezeichnet.

Eine Leitung 3 ist über Dioden 4 mit der Versorgungsspannung von 5 V beaufschlagt. Über Leitung 5 ist ein Anschluß R/T an einem Mikroprozessor 6 auf 1 gesetzt. Ist R/T auf 1 gesetzt, ist der Sender 1 auf Empfang geschaltet.

Ein z.B. mit einem Finger gedrückter Betätigungsschalter 7 verbindet die Leitung 3 über eine Leitung 8 mit GND und setzt den Anschluß R/T auf 0. Der Sender 1 geht beim Umschalten nach einer durch einen Kondensator 11 in der Einrichtung 2 zur Bereitstellung einer Versorgungsspannung von 5 V verursachten zeitlichen Verzögerung mit R/T = 0 auf Sendebetrieb und der Mikroprozessor 6 erzeugt auf eine wie folgt beschriebene Weise aus einem vorgegebenen, abgespeicherten Code ein frequenzmoduliertes Signal mit einer Trägerfrequenz von beispielsweise ca. 418 MHz oder 433 MHz. Das frequenzmodulierte Signal wird an Anschlüssen TX1 und TX2 des Mikroprozessors 6 über Verbindungselemente 10 an eine Antenne 9 ausgegeben, die vorzugsweise mit dem Mikroprozessor 6 auf einer Platine (nicht dargestellt) angeordnet ist. Nach Loslassen des Betätigungsschalters 7 wird wieder mit zeitlicher Verzögerung der Anschluß R/T auf 1 gesetzt, und der Sender 1 geht auf Empfang.

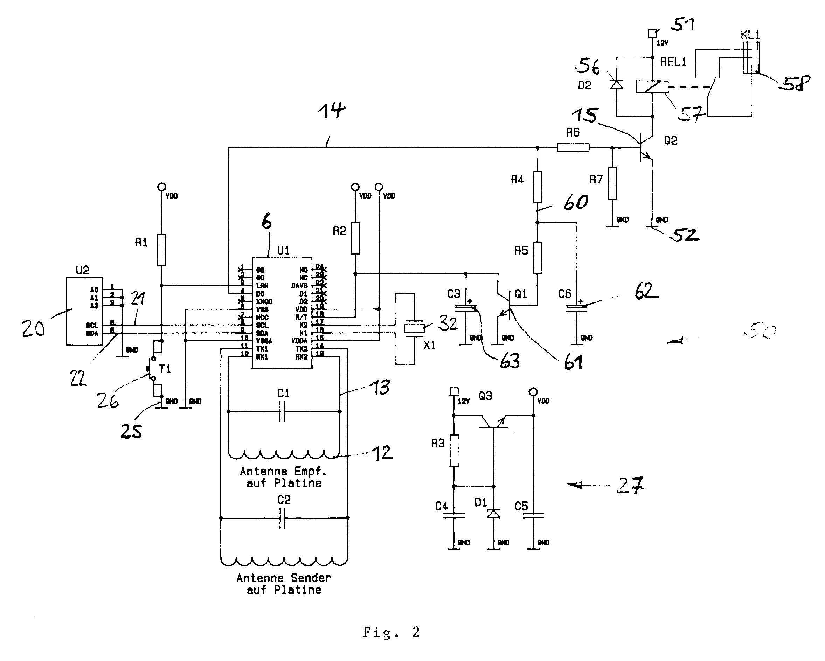

Eine zweite Antenne 12 auf der Platine kann ein Signal von einem Empfänger mit Rückmeldung, wie in Fig. 2 dargestellt, aufnehmen. Von der Antenne 12 wird das empfangene Signal über Verbindungselemente 13 an Anschlüsse RX1 und RX2 des Mikroprozessors 6 weitergeleitet. Die Verbindungselemente 10, 13 sind als auf die Platine geätzte Leiterbahnen ausgeführt. Das empfangene Signal wird im Mikroprozessor 6 auf eine weiter unten beschriebene Art demoduliert und decodiert. Ein Anschluß D0 am Mikroprozessor 6 wird vom empfangenen, demodulierten Signal auf 1 gesetzt, wenn der Code des empfangenen Signals mit einem abgespeicherten, vorgegebenen Code übereinstimmt. Anschluß D0 ist über eine Leitung 14 mit der Basis eines Transistors 15 verbunden, der eine Verbindung von einer Spannungsquelle 18 über eine Leuchtdiode 16 zu einer Masse 19 über eine Leitung 17 leitend schaltet, wenn Anschluß D0=1 ist, so daß Leuchtdiode 16 aufleuchtet und dem Anwender am Sender 1 eine optische Bestätigung gibt, daß sein ausgesandtes Signal empfangen wurde.

Über Anschlüsse D1 und D2 können zu dem an D0 gesetzten Bit zwei weitere Bits gesetzt werden, so daß bis zu 8 verschiedene Befehle für anspruchsvollere Anwendungen des erfindungsgemäßen Funkübertragungssystems als beispielsweise das Öffnen einer Garagentür realisiert werden können. Im dargestellten Beispiel sind die Anschlüsse D1 und D2 nicht besetzt. Arbeitet Mikroprozessor 6 als Sender kann über einen Anschluß XMOD ein serieller Bitstrom in Mikroprozessor 6 eingegeben und mit der Antenne 9 übertragen werden. Arbeitet Mikroprozessor 6 als Empfänger kann über einen Anschluß DAVB des Mikroprozessors 6 ein serieller Bitstrom ausgegeben werden. Der Mikroprozessor 6 kann bei Übertragung eines seriellen Bitstroms nach einem im folgenden beschriebenen Verfahren so gesteuert werden, daß im Mikroprozessor 6 gespeicherte interne Codes nicht verwendet werden.

Anschlüsse SCL und SDA eines EEPROM's 20 sind über Datenaustauscheinrichtungen 21, 22 mit Anschlüssen SCL und SDA des Mikroprozessors 6 verbunden. Über Datenaustauscheinrichtung 21 und Anschlüsse SCL wird ein Zeittaktsignal zwischen EEPROM 20 und Mikroprozessor 6 ausgetauscht. Über Datenaustauscheinrichtung 22 und Anschlüsse SDA werden Codes und Modulationsparameter zwischen EEPROM 20 und Mikroprozessor 6 ausgetauscht.

EEPROM 20 ist mit einem Speicher von 1024 bits ausgestattet, von denen 992 bits zur Abspeicherung von Kodierungen und Modulationsparametern zur Verfügung stehen. Im EEPROM 20 sind im vorliegenden Beispiel 16 Codes mit einer Länge von jeweils 32 Bit abgespeichert. In den Codes sind folgende Vorgaben für den Sende- und Empfangsbetrieb des Mikroprozessors 6 vorgesehen:

1) Frequenz 200-400 Mhz (in 1 kHz Schritten), 2) Ausgangsleistung 1- max 25 mW, 3) Amplituden- oder Frequenzmodulation, 4) Frequenzhub 15-25 kHz, 5) Übertragungsmodus normal oder MM53200 kompatibel, 6) Übertragungsgeschwindigkeit (Bits/s), von 75 baud - 9600 baud variabel, 7) Adressenlänge bis max 32 Bit, 8) Abfragewiederholungen der Übermittlung des Codes bis max 255, ist interessant für den Empfänger, da der Sender per Knopfdruck so oft betätigt werden kann, wie ein Benützer es wünscht, 9) Externe oder interne Modulation Umschaltung, 10) Anzahl gelernter Adressen, 11) Pause zwischen Telegramm in Abhängigkeit von anderen Werten.

Die Übertragung des Codes dauert bei einer Codelänge von 24 Bits, keinen Vorspannbits, Manchester-Verfahren, einer Wiederholung und einer Übertragungsgeschwindigkeit von 600 baud beispielsweise:

24 * 2 * 2 / 600 = 160 ms. In Abhängigkeit von den Parametern der Codes kann mit dem Mikroprozessor 6 schneller oder langsamer übertragen werden.

Es gibt offensichtlich viele Verfahren die Codes in den EEPROMs 20 zu speichern. Die Codes können z. B. bei einem Hersteller dem EEPROM 20 aufgeprägt werden, wobei alle EEPROMs 20 der zu einem Schließsystem gehörigen Sender und Empfänger identische Codes gespeichert haben. Ein weiteres Verfahren besteht darin, einen Anschluß LRN am Mikroprozessor 6 über eine Leitung 25 und einen Schalter 26 vom normalen Zustand LRN=1 auf LRN=0 zu setzen, wenn Schalter 26 gedrückt ist. Mit LRN=0 übergibt Mikroprozessor 6 z. B. per Funkübertragung übermittelte Daten vom Mikroprozessor 6 an EEPROM 20 zur Speicherung eines neuen Codes in EEPROM 20. Vorzugsweise empfängt der Mikroprozessor 6 des Empfängers, wie in Fig. 2 dargestellt, die Daten zur Speicherung eines neuen Codes in EEPROM 20 per frequenzmodulierter Funkübertragung. Die Lernfunktion am Sender 1 ist entbehrlich.

Mikroprozessor 6 ist an Anschlüssen X1 und X2 über Leitungen 30, 31 mit einem außerhalb des Mikroprozessors 6 angeordneten Oszillator 32, vorzugsweise einem elektrodenbeschichteten Quarz, verbunden. Oszillator 32 schwingt mit einer festen Frequenz von ca. 4MHz.

Der Mikroprozessor 6 ist über einen Anschluß VDD an die Einrichtung 2 der Versorgungsspannung angeschlossen und über einen Anschluß VSS geerdet. Im Mikroprozessor 6 integrierte Hochfrequenzverstärker (nicht dargestellt) mit einer Leistung von 10-25 mW sind über einen Anschluß VDDA an die Einrichtung 2 der Versorgungsspannung angeschlossen und über einen Anschluß VSSA geerdet. Anschlüsse GS, G0 am Mikroprozessor 6 sind vorgesehen, um z. B. ein sich öffnendes Garagentor manuell in einer frei wählbaren Zwischenposition oder bei Überschreiten eines Stromschwellenwerts automatisch zu stoppen.

Fig. 2 zeigt einen Empfänger 50 mit Rückmeldung, der auf den Sender 1 mit Rückmeldung aus Fig. 1 abgestimmt ist. Die Übertragung zwischen Sender 1 und Empfänger 50 erfolgt frequenzmoduliert. Entsprechende Merkmale aus Fig. 1 sind in Fig. 2 mit gleichen Bezugszeichen versehen. Eine Einrichtung 27 stellt aus einer Versorgungsspannung von 12 V eine Gleichspannung von 5 V bereit. Die Gleichspannung 5V liegt an den Anschlüssen VDD der Fig. 2 an.

Ein Signal S1 vom Sender 1 mit Rückmeldung wird von der Antenne 12 des Empfängers 50 mit Rückmeldung empfangen und über Leitungen 13 an Eingänge RX1 und RX2 des Mikroprozessors 6 abgegeben. Das Signal S1 wird im Mikroprozessor 6 auf eine weiter unten beschriebene Weise demoduliert und decodiert und bei akzeptierter Codierung des Signals S1 wird am Mikroprozessor 6 des Empfängers 50 Ausgang D0 auf 1 gesetzt. Leitung 14 überträgt das Signal D0=1 an die Basis des Transistors 15 und schaltet den Transistor 15 leitend. Ist der Transistor 15 leitend, fließt an einem von einer Diode 56 geschütztem Relais 57 ein Strom von einer Spannungsquelle 51 mit einer Gleichspannung von 12 V zu einer Masse 52 und Relais 57 wird geschaltet. Relais 57 schaltet zum Beispiel den Antrieb 58 eines Garagentors.

Mikroprozessor 6 des Empfängers 50 ist bei Anschluß R/T=1 auf Empfangsbetrieb und bei R/T=0

auf Sendebetrieb gesetzt. Normalerweise ist der Anschluß R/T=1 am Mikroprozessor 6.

Signal D0=1 geht auch über Leitung 60 an einen Transistor 61 und schaltet den Transistor 61 leitend. Der Anschluß R/T am Mikroprozessor 6, der normalerweise auf 1 gesetzt ist, wird bei leitendem Transistor 61 auf R/T=0 gesetzt. Im Sendebetrieb bei R/T=0 gibt der Mikroprozessor 6 über Ausgänge TX1 und TX2 für das empfangene, akzeptierte Signal S1 ein Bestätigungssignal S2 an den Sender 1 mit Rückmeldung, der dieses Signal S2 mittels Antenne 12 empfängt und auf eine weiter unten beschriebene Weise verarbeitet.

Kondensatoren 62, 63 sind parallel zu dem Transistor 61 und verzögern zeitlich das Umschalten von 0 auf 1 des Anschlusses R/T am Mikroprozessor 6 des Empfängers 50. Die zeitliche Verzögerung kann z.B. ca. 2 sek. betragen, so daß ein Anwender, der versucht mit einem nicht autorisierten Sender, die verschiedenen möglichen Codes durchzuprobieren, um zum Beispiel eine Garagentür ohne die Zustimmung des berechtigten Anwenders zu öffnen, aufgrund der Zeitverzögerung beim Umschalten des Anschlusses R/T und beim Umschalten des Senders ca. 90 Tage brauchen würde, um alle ca. 4 Millionen Codes durchzuprobieren, die bei einer Codelänge von 24 Bit möglich sind. Die zeitliche Verzögerung beim Umschalten des Anschlusses R/T stellt einen Schutz des Empfängers 50 gegen unbefugten Gebrauch dar.

Im EEPROM 20 des Empfängers 50 sind selbstverständlich die selben Codes gespeichert, wie im EEPROM 20 eines zugehörigen Senders 1. Die Codes können dem EEPROM 20 z. B. bei einem Hersteller aufgeprägt werden. Sollen dem EEPROM 20 eines an einer Garage bereits fest installierten Empfängers 50 neue Codes eingegeben werden, weil z. B. der ursprünglich vom Hersteller mitgelieferte Sender verloren gegangen ist, kann ein Anschluß LRN am Mikroprozessor 6 über eine Leitung 25 und einen Schalter 26 vom normalen Zustand LRN=1 auf LRN=0 gesetzt werden, wenn Schalter 26 gedrückt ist. Mit LRN=0 übergibt Mikroprozessor 6 die z. B. per Funkübertragung übermittelten Daten vom Mikroprozessor 6 über Datenaustauschleitungen 21, 22 an EEPROM 20 zur Speicherung neuer Codes im EEPROM 20.

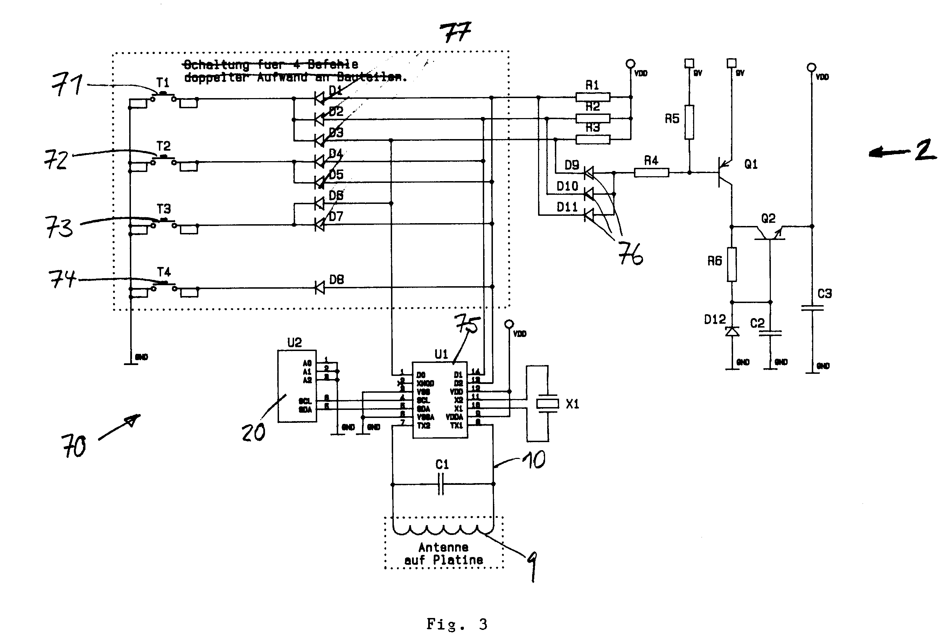

Fig. 3 zeigt einen Handsender 70. Entsprechende Merkmale aus Fig. 1 und Fig. 2 sind in Fig. 3 mit gleichen Bezugszeichen versehen. Eine Einrichtung 2 stellt eine Versorgungsspannung von 5 V bereit. Die Versorgungsspannung 5 V liegt an allen Anschlüssen VDD der Fig. 3 an.

Handsender 70 ist von Schaltern 71, 72, 73, 74 zur Schaltung von 4 Befehlen gesteuert. Die Anschlüsse D0, D1, D2 eines Mikroprozessors 75 sind von der Einrichtung 2 der Versorgungsspannung auf 1 gesetzt, wenn keiner der Schalter 71-74 gedrückt ist. Wird der Schalter 71 gedrückt, werden die Anschlüsse D0, D1 und D2 auf 0 gesetzt. Wird der Schalter 72 gedrückt, werden die Anschlüsse D1 und D2 auf 0 gesetzt. Wird der Schalter 73 gedrückt, werden die Anschlüsse D0

9 EP 0 730 353 A1 10

und D2 auf 0 gesetzt. Wird Schalter 74 gedrückt, wird Anschluß D2 auf 0 gesetzt. Bei Ausnutzung aller Kombinationsmöglichkeiten ließen sich mit den drei Anschlüssen D0, D1, D2 und 4 weiteren Schaltern (nicht dargestellt) bis zu 8 verschiedene Befehle codieren, so daß der Handsender 70 für anspruchsvollere Aufgaben als Betätigen oder Nicht-Betätigen einer Garagentorsteuerung herangezogen werden kann. Die Codierungen für die 8 Befehle können z. B. in einen Vorspann der im EEPROM 20 vom Hersteller gespeicherten Codes aufgenommen werden. Die Anschlüsse D0, D1, D2 des Mikroprozessors 6 sind von Dioden 76, 77 geschützt.

Die nach einem weiter unten beschriebenen Verfahren in dem Mikroprozessor 75 frequenzmodulierten Signale S3 mit dem Code von einem der 4 Befehle werden über Antenne 9 ausgegeben. Mikroprozessor 75 weist keine Anschlüsse RX1, RX2 für eine Empfangsantenne, keinen Ausgang DAVB für einen seriellen Bitstrom, keinen Anschluß LRN, und weist auch einige andere auch im Mikroprozessor 6 aus Fig. 1 und Fig. 2 nicht besetzte Anschlüsse nicht auf.

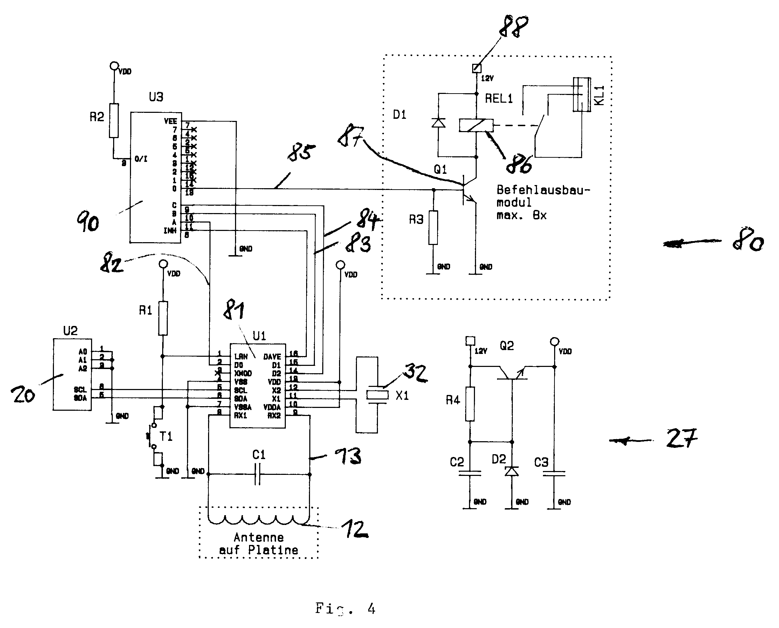

Fig. 4: Ein Empfänger 80 mit Relaisausgang weist eine Einrichtung 27 auf, die aus einer Versorgungsspannung von 12 V eine Gleichspannung von 5 V bereitstellt. Die Gleichspannung 5 V liegt an allen Anschlüssen VDD der Fig. 4 an.

Empfänger 80 nimmt das Signal S3 von dem Handsender 70 über Antenne 12 auf und gibt das Signal S3 an den Mikroprozessor 81 weiter. In Mikroprozessor 81 wird das Signal S3 nach einem weiter unten beschriebenen Verfahren demoduliert und in Abhängigkeit von dem empfangenen Code werden die Ausgänge D0, D1 und D2 auf 0 oder 1 gesetzt. Der Code an den Ausgängen D0, D1 und D2 wird an einen Decoder 90 über Leitungen 82, 83, 84 ausgegeben und im Decoder in einen der 4 Befehle umgesetzt. Der erkannte Befehl wird über einen der Anschlüsse 0-7 des Decoders 90 ausgegeben. Mit einer Leitung 85 zu einem Relais 86 eine der 4 vorgesehenen Befehlsausgaben dargestellt. Ist der Befehl, das Relais 86 zu betätigen vom Decoder 90 erkannt worden, wird der Ausgang 0 auf 1 gesetzt. Mit dem Signal von Ausgang 0=1 wird ein Transistor 87 leitend und ein Strom fließt von einer 12 V-Spannungsquelle 88 durch Relais 86, so daß das Relais 86 anzieht.

Mikroprozessor 81 weist gegenüber Mikroprozessor 75 zwei Anschlüsse mehr auf, nämlich Anschluß LRN und Anschluß DAVE.

Das EEPROM 20 des Empfängers 80 ist ab Hersteller mit den Codes des EEPROMs 20 des Handsenders 70 ausgestattet.

Wird Schalter 26 betätigt, wird der Mikroprozessor 81 am Anschluß LRN auf 0 und damit auf einen Lernmodus gesetzt, und über den Mikroprozessor 81 können in das EEPROM 20 des Empfängers 80 ein oder mehrere neue Codes geladen werden. Über Anschluß DAVE des Mikroprozessors 81 kann ein serieller Bitstrom an den Anschluß INH des Decoders 90 ausgegeben werden.

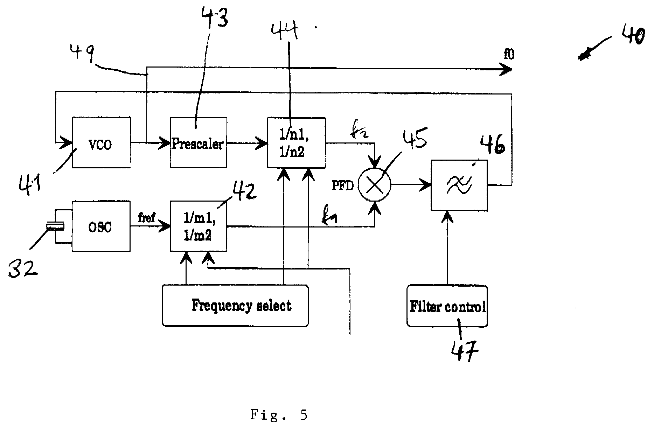

Fig. 5: Ein PLL (Phasenregelkreis) 40 mit einem spannungsgesteuerten Oszillator 41 ist zur Frequenzmodulation abzugebender Codes und zur Frequenzdemodulation empfangener Codes in Mikroprozessor 6, 75, 81 integriert. Der spannungsgesteuerte Oszillator 41 ist ein CMOS (Complementary Metal Oxide Semiconductor) Ring-Oszillator, der Frequenzen über 440 MHz erzeugen kann. Aufgrund der Roll-off-Eigenschaften der zur Anwendung kommenden bipolaren Transistoren stellt der spannungsgesteuerte Oszillator 41 eine nahezu perfekte Sinuswelle an seinem Ausgang 49 bereit.

Im Phasenregelkreis 40 wird eine Bezugsfrequenz fref aus dem Oszillator 32 in einen Frequenzteiler 42 gespeist und wird dort im Fall, daß der Mikroprozessor 6 im Sendebetrieb arbeiten soll, durch einen Satz Parameter m1, m2 geteilt.

Der spannungsgesteuerte Oszillator 41 speist Frequenzen fvco über einen Prescaler 43 in einen Frequenzteiler 44, in dem die Frequenz fvco im Fall, daß der Mikroprozessor 6 im Sendebetrieb arbeiten soll, durch einen Satz Parameter n1 und n2 geteilt wird. Im Frequenzteiler 44 werden in vom EEPROM 20 bestimmten zeitlichen Abständen unterschiedliche Frequenzen in Abhängigkeit vom zu modulierenden Code aus dem EEPROM 20 erzeugt, wobei die Parameter n1, n2, m1 und m2 die zwei Frequenzen im Sendebetrieb bestimmen, die für ein frequenzmoduliertes Signal, insbesondere für zur Umsetzung binärer Signale besonders geeignetes frequency shift keying, erforderlich sind. Im Fall, daß Mikroprozessor 6, 75, 81 im Empfangsbetrieb arbeitet, wird jeweils nur ein Parameter m in Frequenzteiler 42 und ein Parameter n in Frequenzteiler 44 eingegeben. Einer der Parameter n, m ist eine stetige Eingabe zur Bestimmung der Trägerfrequenz. Der andere Parameter ist eine wechselnde Eingabe zur Bestimmung der Frequenzänderungen.

Die in Frequenzteiler 42 modulierten Frequenzen f1 und die in Frequenzteiler 44 modulierten Frequenzen f2 werden einem Phasendetektor 45 zugeführt und überlagert. Phasendetektor 45 erzeugt Spannungen u1, und gibt diese an den spannungsgesteuerten Oszillator 41, der die Ausgabe der Frequenzen fvco ändert bis Phasendetektor 45 die Spannung u1=0 abgibt.

Die modulierten Frequenzen fvco werden mit einem Hochfrequenzverstärker, insbesondere einem hochlinearen Buffer-Verstärker, verstärkt. Der Hochfrequenzverstärker gibt eine Leistung von ca. 10 mW an die Antenne 9 ab, wobei die Leistung des Hochfrequenzverstärkers über Steuerbits aus dem EEPROM 20 zwischen 2mW bis 50 mW variiert werden kann. Das verstärkte, frequenzmodulierte Signal wird an die Ausgänge TX1 und TX2 des Mikroprozessors 6 ausgegeben und von Antenne 9 des Senders 1, 70 abgestrahlt. Verstärker können zur Abstimmung der Antenne mit einem passiven LC-Schwingkreis versehen sein.

Ein Tiefpaßfilter 46 des PLL 40 zur Vermeidung von Synchronisationsstörungen ist von einer digitalen Filtersteuerung 47 programmierbar, die die Übertragungsgeschwindigkeit des Phasenregelkreises 40 steuert. Der Tiefpaßfilter 46 führt bei einer Dämpfung von 3 dB zu hoher Unterdrückung von Synchronisationsstörungen bei niedriger Übertragungsgeschwindigkeit. Die Übertragungsgeschwindigkeit kann jedoch bis zu 9600 Baud erhöht werden, wenn die digitale Filtersteuerung 47 den Tiefpaßfilter 46 auf geringe Genauigkeit und hohe Frequenzmodulation programmiert. Die ganzzahligen Werte der Parametersätze für n und m, die im EEPROM 20 gespeichert sind und vom EEPROM 20 den Frequenzteilern 42, 44 des Phasenregelkreis 40 zugeführt werden, sind beispielsweise:

| | |
|---|---|
| fvco= 418MHz - Modulation | n = 738, m = 113 |
| 418MHz | n = 209, m = 32 |
| 418MHz + Modulation | n = 725, m = 111 |
| 433,92MHz - Modulation | n = 400, m = 59 |
| 433,92MHz | n = 339, m = 50 |
| 433,92MHz + Modulation | n = 895, m = 132. |

Im Fall, daß der Mikroprozessor 6, 81 im Empfangsbetrieb arbeitet, wird die Filtersteuerung 47 nicht benötigt. Ein Empfänger, wie in Fig. 1, 2 und 4 dargestellt, nimmt das Hochfrequenzsignal über Antenne 12 auf und bereitet es auf für die Demodulation im PLL 40 und spannungsgesteuerten Oszillator 41 eines Senders, wie in Fig. 1, 2 und 3 dargestellt. Ein von dem Demodulator abgegebenes Signal wird einem Vergleicher zugeführt, der das demodulierte Signal mit Codes aus dem EEPROM 20 vergleicht. Der Vergleicher gibt ein Signal an den Anschluß D0 des Mikroprozessors 6, 81 und setzt insbesondere den Anschluß D0 auf 1 wenn der empfangene Code mit einem abgespeicherten Code aus EEPROM 20 übereinstimmt. Der Antenne 12 kann ein SAW (Surface Acoustic Wave) Filter vorgeschaltet sein. Im Mikropozessor 6 des Empfängers 1, 50, 80 ist ein bipolarer Eingangsverstärker integriert.

**Patentansprüche**

1. Funkübertragungssystem für frequenz- oder amplitudenmodulierte Datenübertragung mit
   einer Einrichtung (2, 27) zur Bereitstellung einer Gleichspannung,
   einem Mikroprozessor (6, 75, 81),
   einem EEPROM (20), in dem Daten zur Steuerung der Datenübertragung gespeichert sind,
   Datenaustauscheinrichtungen (21, 22) zwischen Mikroprozessor (6, 75, 81) und EEPROM (20), und
   einer ersten Antenne (9, 12) für die Datenübertragung,
   **dadurch gekennzeichnet, daß**
   der Mikroprozessor (6, 75, 81) Bauelemente ((40, 41) der Hochfrequenztechnik zur Modulation von Codes enthält,
   ein Frequenzgeber (32) vorgesehen ist, der an die Bauelemente (40, 41) der Hochfrequenztechnik angeschlossen ist,
   vom EEPROM (20) an die Bauelemente (40, 41) der Hochfrequenztechnik Codes und Modulationsparameter ausgegeben werden,
   ein Anschluß D0 zur Übertragung eines digitalen Signals an dem Mikroprozessor (6, 75, 81) vorgesehen ist.

2. Funkübertragungssystem für frequenz- oder amplitudenmodulierte Datenübertragung gemäß Anspruch 1, dadurch gekennzeichnet, daß ein Eingang R/T für ein digitales Signal an dem Mikroprozessor (6) vorgesehen ist, wobei die Funktion des Mikroprozessors (6) als Sender oder Empfänger am Eingang R/T gesteuert wird.

3. Funkübertragungssystem für frequenz- oder amplitudenmodulierte Datenübertragung gemäß Anspruch 1, dadurch gekennzeichnet, daß Anschluß D0 eine Leuchtanzeige (16) oder ein Relais (57, 86) steuert.

4. Funkübertragungssystem für frequenz- oder amplitudenmodulierte Datenübertragung gemäß Anspruch 2, dadurch gekennzeichnet, daß Anschluß D0 den Eingang R/T steuert.

5. Funkübertragungssystem für frequenz- oder amplitudenmodulierte Datenübertragung gemäß Anspruch 1, dadurch gekennzeichnet, daß am Mikroprozessor (6, 81) ein Eingang LRN vorgesehen ist, der über einen Schalter (26) gesteuert wird, und der Zustand am Eingang LRN den Austausch von Codes von Mikroprozessor (6, 81) zu EEPROM (20) steuert.

6. Funkübertragungssystem für frequenz- oder amplitudenmodulierte Datenübertragung gemäß Anspruch 1, dadurch gekennzeichnet, daß Schalter (71, 72, 73, 74) den Anschluß D0 und Anschlüsse D1 und D2 am Mikroprozessor (75) steuern.

7. Funkübertragungssystem für frequenz- oder amplitudenmodulierte Datenübertragung gemäß Anspruch 1, dadurch gekennzeichnet, daß Anschlüsse D0, D1 und D2 mit einem Decoder (90) mit 8 Ausgängen verbunden sind, die zu unterschiedlichen Schaltern (86) führen.

8. Funkübertragungssystem für frequenz- oder amplitudenmodulierte Datenübertragung gemäß Anspruch 1, dadurch gekennzeichnet, daß ein spannungsgesteuerter Oszillator (41) bipolare Transistoren aufweist.

9.  Funkübertragungssystem für frequenz- oder amplitudenmodulierte Datenübertragung gemäß Anspruch 1, dadurch gekennzeichnet, daß der spannungsgesteuerte Oszillator (41) und der PLL (40) des Senders (1, 50, 70) auch für den Empfänger (1, 50, 80) verwendet wird.

10. Funkübertragungssystem für frequenz- oder amplitudenmodulierte Datenübertragung gemäß Anspruch 1, dadurch gekennzeichnet, daß der PLL (40) digital steuerbar ist.

11. Funkübertragungssystem für frequenz- oder amplitudenmodulierte Datenübertragung gemäß Anspruch 1, dadurch gekennzeichnet, daß Kondensatoren (11) in der Einrichtung (2) zur Bereitstellung einer Versorgungsspannung oder dem Anschluß R/T vorgeschaltete Kondensatoren (62, 63) vorgesehen sind, die das Umschalten von Senden auf Empfang verzögern.

Fig. 1

Fig. 2

Fig. 3

Fig. 4

Fig. 5

))) **Europäisches Patentamt** EUROPÄISCHER RECHERCHENBERICHT

Nummer der Anmeldung

EP 95 10 2827

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | ELECTRONICS & WIRELESS WORLD, Bd. 99, Nr. 1684, März 1993 SUTTON,GB, Seiten 210-216, XP 000339534 MATTOS 'GPS 4: radio architecture' * Seite 214, Spalte 3, Zeile 23 - Seite 216, Spalte 3, Zeile 14 * | 1,2,8-10 | H04B1/40 H04B1/38 |
| A | PROCEEDINGS OF THE IEEE 1993 CUSTOM INTEGRATED CIRCUITS CONFERENCE, 12.Mai 1993 SAN DIEGO,CA,US, Seiten 16.4.1-16.4.4, XP 000409716 AVIDOR ET AL 'A DIRECT SEQUENCE SPREAD SPECTRUM TRANSCEIVER CHIP' * Seite 16.4.2, Spalte 1, Zeile 21 - Seite 16.4.4, Spalte 2, Zeile 24 * | 1,2,4,11 | |
| | | | RECHERCHIERTE SACHGEBIETE (Int.Cl.6) |
| | | | H04B |

Der vorliegende Recherchenbericht wurde für alle Patentansprüche erstellt

| Recherchenort | Abschlußdatum der Recherche | Prüfer |
|---|---|---|
| DEN HAAG | 14.Juli 1995 | Andersen, J.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.........................................
& : Mitglied der gleichen Patentfamilie, übereinstimmendes Dokument

EPO FORM 1503 03.82 (P04C03)